(19) **Europäisches Patentamt / European Patent Office / Office européen des brevets**

(11) **EP 3 136 582 B1**

(12) **EUROPEAN PATENT SPECIFICATION**

(45) Date of publication and mention
of the grant of the patent:
**04.12.2019 Bulletin 2019/49**

(51) Int Cl.:
*H02M 7/493* *(2007.01)*    *H02M 7/5395* *(2006.01)*
*H02M 7/5387* *(2007.01)*

(21) Application number: **15182139.4**

(22) Date of filing: **24.08.2015**

(54) **MODULATION METHOD FOR CONTROLLING AT LEAST TWO PARALLEL-CONNECTED, MULTI-PHASE POWER CONVERTERS**

MODULATIONSVERFAHREN ZUM ANSTEUERN VON MINDESTENS ZWEI PARALLEL GESCHALTETEN MEHRPHASEN-STROMWANDLERN

PROCÉDÉ DE MODULATION POUR COMMANDER AU MOINS DEUX CONVERTISSEURS DE PUISSANCE MULTIPHASES CONNECTÉS EN PARALLÈLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.03.2017 Bulletin 2017/09**

(73) Proprietor: **ABB Schweiz AG**
**5400 Baden (CH)**

(72) Inventors:
• **Kieferndorf, Frederick**
  **5405 Baden-Daettwil (CH)**
• **Park, Ki-Bum**
  **5405 Baden-Daettwil (CH)**
• **Viitanen, Tero**
  **00380 Helsinki (FI)**
• **Pettersson, Sami**
  **5405 Baden-Daettwil (CH)**
• **Canales, Francisco**
  **5405 Baden-Daettwil (CH)**

(74) Representative: **Kolster Oy Ab**
**(Salmisaarenaukio 1)**
**P.O. Box 204**
**00181 Helsinki (FI)**

(56) References cited:
**EP-A1- 1 959 551     US-A1- 2012 147 639**

• **WOO-CHEOL LEE ET AL: "Comparison of Single-Sensor Current Control in the DC Link for Three-Phase Voltage-SourcePWM Converters", IEEE TRANSACTIONS ON INDUSTRIAL ELECTRONICS, IEEE SERVICE CENTER, PISCATAWAY, NJ, USA, vol. 48, no. 3, 3 June 2001 (2001-06-03), XP011023833, ISSN: 0278-0046**

**Description**

FIELD

The present disclosure relates to power converters, and particularly to modulation of parallel-connected converters comprising converter bridges.

BACKGROUND INFORMATION

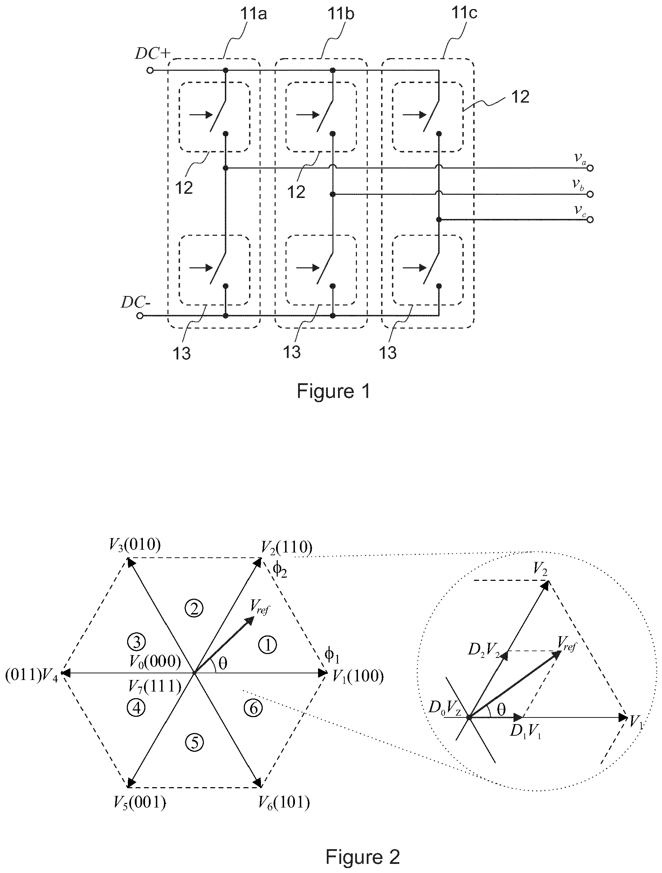

Power converters are being used in a large variation of applications. A power converter, such as a frequency converter, may comprise a converter bridge, and the output voltage of the converter may be controlled by controlling the operational states of power semiconductor switches in the converter bridge. Figure 1 shows a simplified representation of an exemplary two-level, three-phase converter bridge of a frequency converter. The converter bridge in Figure 1 is supplied through two DC terminals *DC+* and *DC-* and generates three output phase voltages $v_a$, $v_b$, and $v_c$. The converter bridge comprises three converter legs 11a to 11c, each leg driving one of the phase voltages and comprising an upper power semiconductor switch 12, and a lower power semiconductor switch 13.

Converters comprising a converter bridge generate desired outputs by using pulse width modulation (PWM). For each converter leg of the converter bridge, the switches in the converter leg may be modulated between a conducting state and a non-conducting state in order to produce the desired phase voltage. For example, in Figure 1, the two switches 12 and 13 of each leg may be controlled such that one of the switches is conducting and the other non-conducting. Thus, in principle (disregarding switching transitions), each converter leg can be in one of two operational states. Space vector modulation (SVM) is a carrierless PWM scheme. Space vector modulation can produce a high modulation index while maintaining a low total harmonic distortion (THD). The operational states of the switches of the converter bridge are controlled to form specified switching sets (i.e. a predefined combination of operational states of the switches). Each switching set represents a predefined output voltage vector, i.e. a space vector. The desired output voltage may be generated by controlling duty cycles of the space vectors.

In order to achieve a higher power rating, a plurality of power converters may be connected in parallel. The parallel-connected converters may be considered to operate as one large converter. Ideally, no additional components are required. However, in practice, additional inductances may have to be placed between the parallel phases in order to cope with possible timing or device characteristic mismatches.

US 2012/147639 A1 discloses a modulation method for controlling at least two parallel-connected, multi-phase power converters, wherein the method comprises generating synchronized switching sequences for the power converters on the basis of a common modulation reference, wherein each synchronized switching sequence comprises a first half sequence followed by a second half sequence.

BRIEF DISCLOSURE

An object of the present invention is to provide a method and an apparatus for implementing the method so as to alleviate the above disadvantages. The objects of the invention are achieved by a method and an arrangement which are characterized by what is stated in the independent claims. The preferred embodiments of the invention are disclosed in the dependent claims.

The present disclosure presents an efficient method for generating a multiplicity of duty cycle values for parallel-connected converters with converter bridges. The method involves using complementary switching sequences in the converters. Switching sequences of different converters may also be staggered so that the starting instants of the switching sequences have a set delay between each other. One set of base space vector duty cycles may be calculated for a reference vector. The reference vectors may be generated by any open loop or closed control method which generates a desired average output, typically a sinusoidally varying waveform.

A method according to the present disclosure the allows generation of turn-on and turn-off transition signals of the switches in the parallel-connected converter bridges from a single set of reference switching signals. The method may be implemented with minimum added complexity. Further, by using the complementary switching sequences, the effective output pulse frequency may be doubled without an increase in switching losses. With a higher effective output pulse frequency, the size of an output filter filtering the shared output of the parallel-connected converters may be reduced. The method is applicable for two-level converters and can be easily extended to multi-level converters.

BRIEF DESCRIPTION OF THE DRAWINGS

In the following the invention will be described in greater detail by means of preferred embodiments with reference to the attached drawings, in which

Figure 1 shows a simplified representation of an exemplary two-level, three-phase converter bridge;

Figure 2 shows eight space vectors for the exemplary two-level, three-phase converter bridge of Figure 1;

Figures 3a and 3b show exemplary switching sequences for sector 1 of Figure 2;

Figure 4 shows an example of the selection of the zero vectors on the $\alpha\beta$ plane according to a discontinuous SVM scheme;

Figure 5 shows an exemplary switching sequence according to a discontinuous SVM scheme;

Figure 6 shows exemplary synchronized switching sequences of complementary sequence types for two converters;

Figure 7 shows exemplary synchronized switching sequences of three converters where the sequences are initialized at set intervals;

Figure 8 shows exemplary synchronized switching sequences of four converters;

Figure 9 shows an exemplary arrangement controlling at least two parallel-connected, multi-phase power converters; and

Figure 10 shows an exemplary, simplified implementation of the generation of first half sequences and second half sequences for a three-phase converter.

## DETAILED DISCLOSURE

The present disclosure describes a modulation method for controlling at least two parallel-connected, multi-phase power converters, such as frequency converters. The power converters comprise a converter bridge. The method controls duty cycles of switching states of converter bridges in the power converters. The duty cycles may be determined on the basis of a space vector modulation scheme, for example. The present disclosure further describes an arrangement implementing the modulation method.

In space vector modulation, a multi-phase output voltage may be represented by a space vector, i.e. a single voltage vector rotating in a stationary alpha-beta ($\alpha\beta$) reference frame. A reference for a desired multi-phase output voltage or current may also be a vector. For example, in a three-phase converter system, three phase voltages $\mathbf{v}_{abc}$ (= $[v_a, v_b, v_c]^{\mathrm{T}}$) in a stationary reference frame may be transformed to the $\alpha\beta$ reference frame by using Clarke transformation $\mathbf{T}$:

$$\mathbf{T} = \frac{2}{3}\begin{bmatrix} 1 & -\dfrac{1}{2} & -\dfrac{1}{2} \\ 0 & -\dfrac{\sqrt{3}}{2} & \dfrac{\sqrt{3}}{2} \end{bmatrix}. \tag{1}$$

An $\alpha\beta$ reference frame vector representation $\mathbf{v}_{ref}$ of the three-phase voltage references $\mathbf{v}_{abc}$ is then:

$$\mathbf{v}_{ref} = \mathbf{T}\mathbf{v}_{abc}. \tag{2}$$

The operational states of the switches of the converter bridge are controlled to form predefined switching sets (i.e. predefined combinations of operational states of the switches). Each switching set represents a predefined output voltage vector, i.e. a space vector. The desired output voltage may be generated by controlling duty cycles of the space vectors. A duty cycle represents the percentage of time a space vector is active during a switching sequence. In this context, a switching sequence represents a sequence of duty cycles of output space vectors forming a full switching cycle.

Figure 2 shows eight space vectors $V_0$ to $V_7$ for the exemplary two-level, three-phase converter bridge of Figure 1. In Figure 2, all eight space vectors are shown on the left. An enlarged view of sector 1 of the space vectors is shown on the right in Figure 2. The space vectors, as well as a voltage reference vector $\mathbf{V}_{ref}$ at angle $\theta$, are shown in the stationary $\alpha\beta$ reference frame in Figure 2. In the two-level converter topology of Figure 1, each converter leg can be in one of two operational states, and with all three converter legs, the converter can produce eight different switching sets and, thus, eight space vectors. The operational state of a converter leg where the upper switch is conducting (and the lower switch is non-conducting) is denoted a "high" or "1" state and the other state (where the upper switch is not conducting and the lower switch is conducting) is a "low" or "0" state. A converter leg may be controlled to either state on the basis of a converter leg control signal. The eight switching sets $V_0$ to $V_7$ are denoted with "000", "001", "010", "011", "100", "101", "110", and "111", respectively, by using the same logic. The switching sets producing the space vectors $V_0$ to $V_7$ are shown in parenthesis next to the space vector references.

In Figure 2, two of the space vectors (i.e. $V_0$ and $V_7$) are zero vectors that drive all phases to the same voltage potential (i.e. either to $DC$- or $DC$+). In other words, the zero vectors represent switching sets that do not generate voltage differences between any of the phases. The other six space vectors $V_1$ to $V_6$ are active vectors that drive the phases to different voltage potentials. In other words, at least one phase is driven to a different voltage potential from the other phases. The endpoints of the space vectors define triangular modulation sectors. Any output voltage within a modulation sector may be generated using the space vectors defining the sector. The sectors together define an area within which the space vectors are able to produce output voltages. Six such sectors are indicated by circled numbers 1 - 6 in Figure 2.

The relation between a reference output voltage vector and the duty cycles of the space vectors may be represented by the following equations:

$$\mathbf{v}_{ref} = D_0 \mathbf{v}_Z + D_1 \mathbf{v}_{A,1} + D_2 \mathbf{v}_{A,2} , \qquad (3)$$

$$D_0 + D_1 + D_2 = 1 , \qquad (4)$$

where $\mathbf{v}_z$ is one or both of the zero vectors $V_0$ and $V_7$, $\mathbf{v}_{A,1}$ and $\mathbf{v}_{A,2}$ represent two of the active vectors $V_1$ to $V_6$. $D_1$ and $D_2$ represent the duty cycle of the active vectors $\mathbf{v}_{A,1}$ and $\mathbf{v}_{A,2}$. $D_0$ is the duty cycle of the zero vector $\mathbf{v}_z$.

The two active vectors may be considered to form a non-orthogonal coordinate system. A duty cycle for an active vector may then be represented by a projection of the output voltage on one active vector along the other active vector. The right-hand side of Figure 2 shows an example of a voltage reference voltage being generated as a sum of a first active vector $V_1$ and a second active vector $V_2$. On the right-hand side of Figure 2, the vector $D_1V_1$ represents the projection of the output voltage along the first axis $D_1$. Thus, the duty cycle $D_1$ for the active vector $V_1$ can be calculated as a ratio between the projection and the first active vector $V_1$. The duty cycle for the second active vector may be calculated in a similar manner. In Figure 2, for example, the angle between two neighbouring active vectors is 60°. The duty cycles $D_1$ to $D_2$ for active vectors $V_1$ and $V_2$, respectively, may be calculated as follows:

$$D_1 = \frac{\sqrt{3}\left|\mathbf{v}_{ref}\right|}{V_{dc}} \sin\left(60° - \theta\right), \qquad (5)$$

$$D_2 = \frac{\sqrt{3}\left|\mathbf{v}_{ref}\right|}{V_{dc}} \sin\left(\theta\right) . \qquad (6)$$

When the duty cycles for the active vectors are known, the duty cycle from the zero vector(s) may be calculated from Equation (4). The actual turn-on and turn-off instants may then be calculated on the basis of the duty cycle and the length of the switching sequence.

A method according to the present disclosure is not limited only to space vector modulation. Other methods may be used for determining the duty cycles. For example, the duty cycles may be generated by using hysteresis control. Further, although the above embodiments discuss two-level converter bridges, a method according to the present disclosure may also be used with multi-level converters.

In a method according to the present disclosure, each parallel-connected power converter generates an output voltage vector by executing synchronized switching sequences that produce the above-described duty cycles. Each synchronized switching sequence comprises a first half sequence followed by a second half sequence. For example, a switching sequence producing an output voltage vector may be generated by using a first sequence type in which a turn-high half sequence (i.e. a rising-edge half sequence) comes before a turn-low half sequence (i.e. a falling-edge half sequence).

During the turn-high half sequence, the phase outputs may be switched high (i.e. set to a "high" state) in sequence. Switching a phase output high may be interpreted as connecting the phase output to a higher voltage potential. For example, in a two-level converter topology, switching a phase output high may mean disconnecting the phase output from the negative DC link potential and connecting it to the positive DC link potential.

During the turn-low half sequence, the phase outputs may be switched low in reverse sequence. Switching a phase output low may be interpreted as setting the phase to a "low" state, i.e. connecting the phase output to a lower voltage potential. For example, in a two-level converter topology, switching a phase output low may mean disconnecting the phase output from the positive DC link potential and connecting it to the negative DC link potential.

Alternatively, a switching sequence producing the same output voltage vector may be generated by using a second, complementary sequence type in which a rising-edge half sequence is performed after a falling-edge half sequence.

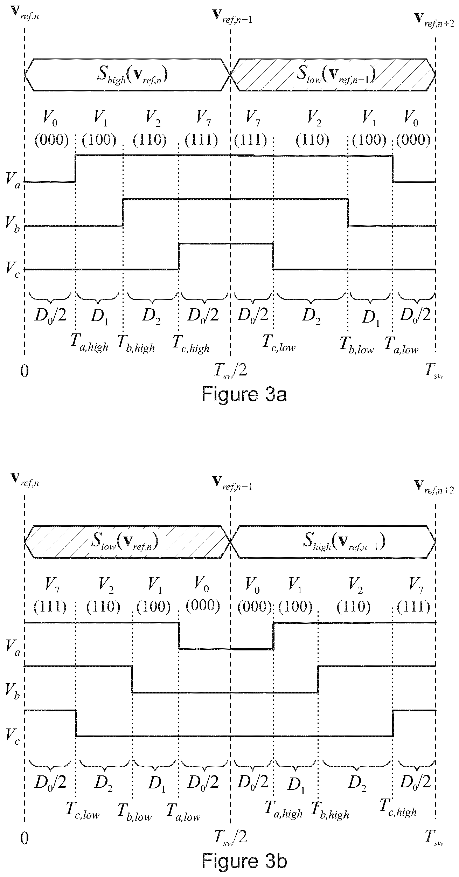

Figures 3a and 3b show exemplary switching sequences for sector 1 of Figure 2. Figure 3a shows a switching sequence using the first sequence type. The switching sequence comprises two half sequences: first a turn-high half sequence $S_{high}$ (shown as a white block) and then a turn-low half sequence $S_{low}$ (shown as a hatched block). The switching sequence has length $T_{sw}$. Figure 3a shows phase voltages $v_a$, $v_b$, and $v_c$ being turned high during the turn-high half sequence $S_{high}$. Duty cycles $D_1$ and $D_2$ of the active vectors correspond to the given reference. The zero duty cycle $D_0$ may be divided equally between the two zero vectors $V_0$ and $V_7$ at both ends of a half sequence, as shown in Figure 3a. In Figure 3a, at switching instant $T_{a,high}(=D_0/2 \cdot T_{sw}/2)$, phase $V_a$ is turned high, i.e. set to a "high" state. At switching instant $T_{b,high}(=T_{a,high}+D_1 \cdot T_{sw}/2)$, phase $V_b$ is turned high. At switching instant $T_{c,high}(=T_{a,high}+T_{b,high}+D_2 \cdot T_{sw}/2)$, phase $V_c$ is turned high. Figure 3a also shows phase voltages $v_a$, $v_b$, and $v_c$ being turned low during the turn-low half sequence $S_{low}$.

Figure 3b shows a switching sequence using the second, complementary sequence type for producing the same output voltage vector as in Figure 3a. The switching sequence comprises two half sequences: first a turn-low half sequence $S_{low}$ (shown as a hatched block) and then a turn-high half sequence $S_{high}$ (shown as a white block). The switching sequences shown in Figures 3a and 3b produce the same output voltage vectors.

In a method according to the present disclosure, switching sequences of at least two parallel-connected power converters may be generated such that both switching sequence types, i.e. the first type and the second type, are concurrently being used for producing output voltages. The synchronized switching sequences of at least one of the power converters may be such that the first half sequence is a rising-edge half sequence and the second half sequence is a falling-edge half sequence, and the synchronized switching sequences of at least one of the power converters may be such that the first half sequence is a falling-edge half sequence and the second half sequence is a rising-edge half sequence. In other words, for at least one of the converters, the switching sequences are generated by using a first sequence type in which a rising-edge half sequence is performed before a falling-edge half sequence and, for at least one of the converters, the switching sequences are generated by using a second, complementary sequence type in which a rising-edge half sequence is performed after a falling-edge half sequence.

As the first switching sequence type and the second switching sequence type produce the output voltage vector by activating the space vectors in a different order, the converters drive the switches in their converter bridges into differing switching sets, and the effective pulse frequency of the arrangement of parallel-connected converters is increased.

Since both the turn-high half sequence and the turn-low half sequence are capable of producing any desired modulation reference within the area defined by the modulation sectors, sampling of the reference may be asymmetrical. During a switching sequence, the turn-low sequence may use a different reference value than the turn-high sequence. Thus, the length of a control cycle of the modulation may equal the length of half of a switching sequence. The duty cycles may represent switching sets being used for a percentage of a half sequence. In order to calculate the duration that a space vector must be active, the duty cycle in question may simply be multiplied by the length of the half sequence.

In Figures 3a and 3b, the modulation references are represented by a reference voltage vector that has a first value $\mathbf{v}_{ref,n}$ at the beginning of the first half sequence ($S_{high}$ in Figure 3a and $S_{low}$ in Figure 3b) in the switching sequence. However, when the first half sequence is finished, the reference is updated to a new value $\mathbf{v}_{ref,n+1}$, and the duty cycles of the subsequent half sequence ($S_{low}$ in Figure 3a and $S_{high}$ in Figure 3b) are based on the updated value $\mathbf{v}_{ref,n+1}$.

In Figures 3a and 3b, the zero duty cycle is divided equally between the two zero vectors at both ends of a half sequence. This approach may be called continuous SVM. Alternatively, discontinuous SVM may be used. In one type of discontinuous SVM, only one of the zero vectors is used during a half sequence. As a result, the half sequences may be performed with only two switching events. However, the area defined by the modulation sectors is divided into discontinuous regions centred on the peak voltages. Within each such region, only one of the zero vectors is used.

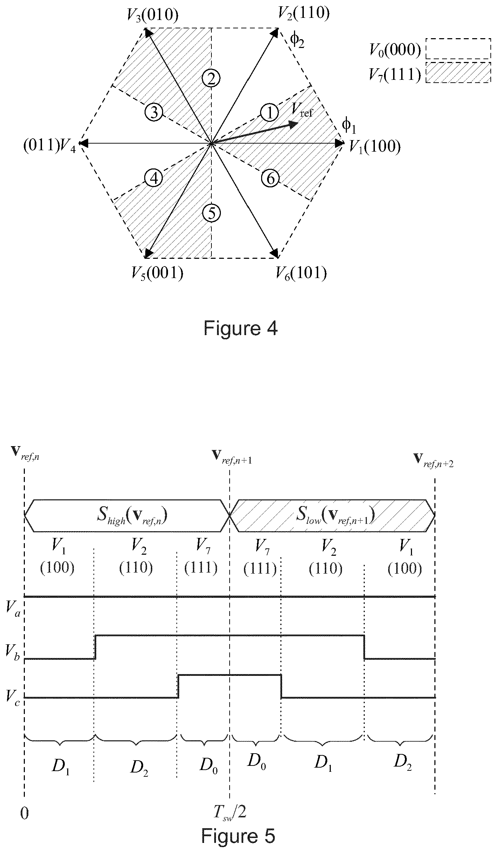

Figure 4 shows an example of the selection of the zero vectors $V_0$ and $V_7$ in the $\alpha\beta$ plane, when using a discontinuous modulation strategy (i.e. only one zero vector during the switching sequence). The discontinuous region can be shifted by an arbitrary angle to track the peak current and achieve the maximum benefit. In Figure 4, the reference voltage $V_{ref}$ is in a region where the zero vector $V_7$ is used.

Figure 5 shows an exemplary switching sequence in sector 1 of Figure 4. In Figure 5, phase voltages $v_a$, $v_b$, and $v_c$ are turned high during a turn-high half sequence $S_{high}$. The duty cycles $D_1$ and $D_2$ of the active vectors correspond to the given reference. Figure 5 also shows phase voltages $v_a$, $v_b$, and $v_c$ being turned low during the turn-low half sequence $S_{low}$. The reference voltage has a first value $\mathbf{v}_{ref,n}$ at the beginning of the turn-high half sequence $S_{high}$. However, the duty cycles of the subsequent turn-low half sequence $S_{low}$ are based on an updated value $\mathbf{v}_{ref,n+1}$.

In a method according to the present disclosure, the switching sequences of the parallel-connected converters may be generated on the basis of a common modulation reference. The value of the reference may be periodically updated, and at the same time the synchronized switching sequences of complementary sequence types may be based on the same update of the value of the common modulation reference. The value of the modulation reference may be updated for each half sequence in a switching sequence. When the converters use the latest value of the common modulation reference for each half sequence of their switching sequences, good control response may also be achieved.

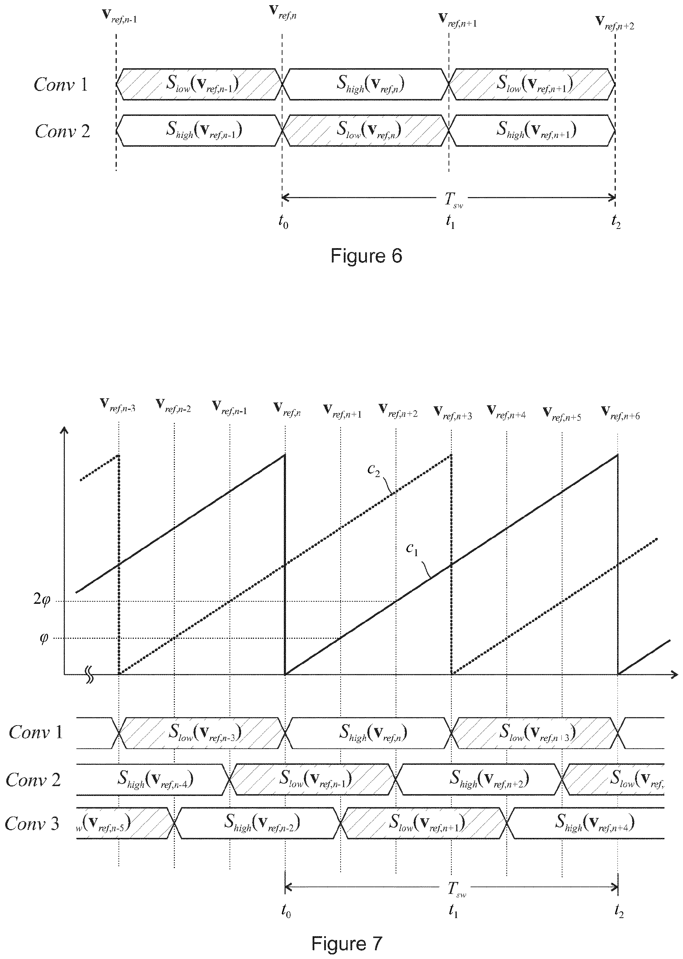

Figure 6 shows exemplary synchronized switching sequences of complementary sequence types being generated on the basis of a common reference. In Figure 6 at time instant $t_0$, a first converter *Conv* 1 initiates a switching sequence according to the first sequence type and starts to produce a turn-high half sequence $S_{high}(\mathbf{v}_{ref,n})$ on the basis of an updated value $\mathbf{v}_{ref,n}$ of the common reference. At the same instant, a second converter *Conv* 2 initiates a complementary switching sequence according to the second sequence type and starts a turn-low half sequence $S_{low}(\mathbf{v}_{ref,n})$ on the basis of the same updated value $\mathbf{v}_{ref,n}$ of the common reference. As the turn-high half sequence and the turn-low half sequence produce the output by activating the space vectors in a different order, the converters use differing switching sets, and the effective pulse frequency of the arrangement of parallel-connected converters is increased. At instant $t_1$, the first half sequences $S_{high}(\mathbf{v}_{ref,n})$ and $S_{low}(\mathbf{v}_{ref,n})$ finish, new value $\mathbf{v}_{ref,n+1}$ is updated for the reference. Converter *Conv* 1 begins the second half sequence $S_{low}(\mathbf{v}_{ref,n+1})$ and converter *Conv* 2 begins the second half sequence $S_{high}(\mathbf{v}_{ref,n+1})$. The second half sequences are based on the updated value $\mathbf{v}_{ref,n+1}$ of the common reference.

The effective pulse frequency may be increased by initiating the synchronized switching sequences of the parallel-connected converters in a staggered manner. The initializations of the synchronized switching sequences of at least two of the power converters may have a first time interval between them, and the value of the modulation reference may be updated at the start of each synchronized switching sequence of each converter. Starting instants of the switching sequences may be evenly distributed, for example. In other words, the intervals separating the starting instants of the switching sequences may be equal. Further, having an interval between the starting times of the switching sequences may reduce common mode voltages which might emerge when converters using complementary half cycles simultaneously use different zero vectors that tie output phases of the converters to different potentials.

Figure 7 shows exemplary synchronized switching sequences of three converters where the sequences are staggered, i.e. are initialized at set intervals. In Figure 7, the time interval between the starting times of the sequences corresponds to a third of a half sequence. At instant $t_0$, the reference is updated to value $\mathbf{v}_{ref,n}$, and converter *Conv* 1 starts a switching sequence with a turn-high half sequence $S_{high}(\mathbf{v}_{ref,n})$. A third of a half sequence later, the reference is updated again, now to value $\mathbf{v}_{ref,n+1}$, and converter *Conv* 3 starts a complementary switching sequence with a turn-low half sequence $S_{low}(\mathbf{v}_{ref,n+1})$ type. A third of a half sequence later, the reference is updated yet again to value $\mathbf{v}_{ref,n+2}$, and converter *Conv* 2 starts a switching sequence with a turn-high half sequence $S_{high}(\mathbf{v}_{ref,n+2})$. In Figure 7 at instant $t_1$, converter *Conv* 1 finishes the first half of its switching sequence, the reference is updated to value $\mathbf{v}_{ref,n+3}$, and converter *Conv* 1 starts the second half of the switching sequence with a turn-low half sequence. A third of a half sequence later, converter *Conv* 3 starts the second half of the switching sequence with a turn-high half sequence using value $\mathbf{v}_{ref,n+4}$. A third of a half sequence later, converter *Conv* 2 starts the second half of the switching sequence with a turn-low half sequence using value value $\mathbf{v}_{ref,n+5}$.

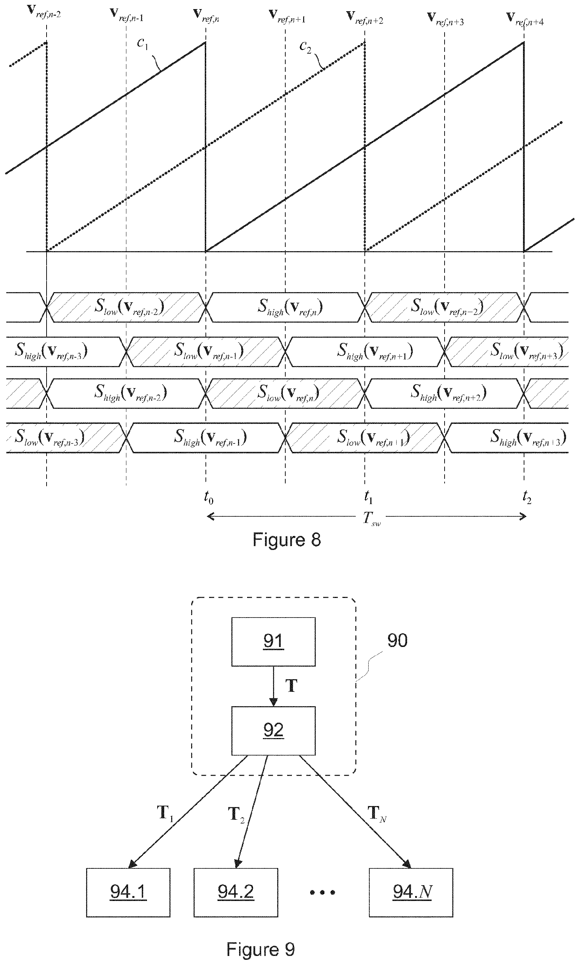

Figure 8 shows exemplary synchronized switching sequences of four converters. At time instant $t_0$, a first converter *Conv* 1 initiates a switching sequence according to the first sequence type and starts to produce a turn-high half sequence $S_{high}(\mathbf{v}_{ref,n})$ on the basis of an updated value $\mathbf{v}_{ref,n}$ of the reference. At the same instant, a second converter *Conv* 3 initiates a complementary switching sequence according to the second sequence type and starts a turn-low half sequence $S_{low}(\mathbf{v}_{ref,n})$ on the basis of the same updated value $\mathbf{v}_{ref,n}$. A half of a half sequence later, the reference is updated to value $\mathbf{v}_{ref,n+1}$, and converters *Conv* 2 and *Conv* 2 start their switching sequences based on the updated value $\mathbf{v}_{ref,n+1}$.

In Figure 8 at instant $t_1$, converters *Conv* 1 and *Conv* 2 finish the first half of their switching sequences, the reference is updated to value $\mathbf{v}_{ref,n+2}$, and the converters start the second half of their switching sequences. A half of the length of a half sequence later, converters *Conv* 2 and *Conv* 4 start the second half of their switching sequences based on reference value $\mathbf{v}_{ref,n+3}$.

The above embodiments relate to 2, 3, and 4 parallel-connected converters. However, a method according to the present disclosure is also applicable to any multitude of parallel-connected converters.

In some embodiments, the modulation reference and, thus, also the duty cycles from which the switching instants are calculated, may also be calculated more than once per half sequence. For example, the sequences may be updated any number of times during a half switching sequence. This may further increase the control responsiveness. On the other hand, additional logic may be necessary to ensure that none of the phase legs switch more than once per half switching sequence.

In a method according to the present disclosure, a single modulator system may be used for generating switching sequences for all power converters. The modulator system may generate the synchronized switching sequences for each parallel-connected power converter on the basis of a common modulation reference. The modulator system may be configured to generate the synchronized switching sequences so that for at least one of the converters, the first half sequence is a rising-edge half sequence and the second half sequence is a falling-edge half sequence, while for at least one of the other converters, the first half sequence is a falling-edge half sequence and the second half sequence is a rising-edge half sequence.

Staggering of the initialization of switching sequences of the parallel-connected converters may be accomplished by shifting the initialization by (a multiple of) the first time interval. Each converter's individual switching instant values may be determined by adding the first time interval (or its multiple) to base switching instant values calculated directly from the duty cycles. Thus, the modulator system may comprise, for each power converter, adjustment means for determining individual switching instant values on the basis of the common modulation reference and the first time interval between power converters.

The modulator system may comprise a first periodic counter and a second periodic counter. The period of the first counter and the second counter may be the length of the synchronized switching sequence. The first and second counter may have a phase shift between each other. The phase shift may be half of the length of the switching sequence, for example.

The first half sequences in the synchronized switching sequences may be generated by using the first counter and the second half sequences in the synchronized switching sequences may be generated by using the second counter. The modulator system may comprise, for each power converter, modulator means configured to generate the first half sequences on the basis of a comparison between the first counter and the individual switching instant values and the second half sequences on the basis of a comparison between the second counter and the individual switching instant values.

For example, Figures 7 and 8 show two counters $c_1$ and $c_2$. Counters $c_1$ and $c_2$ in Figures 7 and 8 are increasing counters which are reset after counting to a value representing the length $T_{sw}$ of a full switching sequence. The counters have a phase shift of half of the length $T_{sw}$ of the switching sequence between each other. Figures 7 and 8 show counter $c_1$ being reset at instant $t_0$ and counter $c_2$ being reset at instant $t_1$. In Figures 7 and 8, the converters use counter $c_1$ for generating the first halves of their switching sequences.

For example, at instant $t_0$ in Figure 7, a first converter *Conv* 1 starts a first half sequence $S_{high}(\mathbf{v}_{ref,n})$ at zero value of counter $c_1$. The third converter *Conv* 3 initiates its first half sequence after a first time interval has passed. In this case, its first half sequence is a falling-edge half sequence. The switching instants may be determined by adding a value $\varphi$ (representing the first time interval) to the switching instant values calculated from the duty cycles. In Figure 7 these switching instant values are based on an updated value $\mathbf{v}_{ref,n+1}$ of the modulation reference. Next, the second converter *Conv* 2 initiates its first half sequence, after the first time interval has passed again. The half sequence starts when the counter reaches value $2\varphi$ representing twice the first time interval. The switching instants are based on a new update $\mathbf{v}_{ref,n+2}$ of the reference.

Figure 9 shows an exemplary arrangement controlling at least two parallel-connected, multi-phase frequency converters. In Figure 9, a modulator system 90 comprises a reference modulator 91 that generates the common modulation reference that defines reference switching instants T. The modulator system 90 further comprises an adjustment system 92 which generates, using a method according to the present disclosure, individual modulation references $\mathbf{T}_1$ - $\mathbf{T}_N$ for each parallel-connected converter 94.1 - 94.*N*, respectively.

In Figure 9, the adjustment 92 system comprises the two counters having a phase shift between each other. The adjustment system 92 acts as the means for generating the first half sequences and the second half sequences. The adjustment system 92 calculates adjusted switching instants for each switch of each parallel-connected frequency converter by adding a value representing the time interval between the initialization instant of the switching sequence of the converter and the initialization of the common reference switching sequence with respect to the common modulation reference. The adjustment system 92 then generates the first and second half sequences by using the two counters and the adjusted switching instant values.

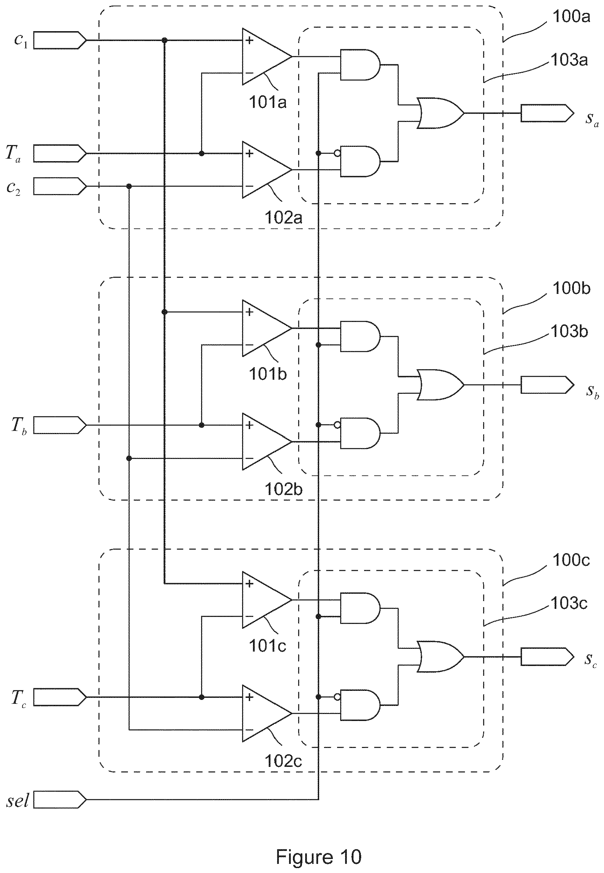

Figure 10 shows an exemplary, simplified implementation for generating the first half sequences and the second half sequences of a three-phase converter. In Figure 10, three modulator blocks 100a to 100c are shown.

Each modulator block 100a to 100c controls one phase output and comprises a first comparator (101a to 101c), a second comparator (102a to102c), and a multiplexer (103a to 103c). Each modulator block receives a switching instant ($T_a$ to $T_c$) and values of two counters $c_1$ and $c_2$ as inputs. The switching instants represent instants at which the phase is to be switched to a different potential, i.e. when a converter leg driving the phase will change its operational state, as shown in Figures 3a and 3b, for example.

The switching instants $T_a$ to $T_c$ may include a term representing (a multiple of) the first time interval between the switching cycles of the parallel-connected converters. The counters $c_1$ and $c_2$ are synchronized incrementing counters that have a period of the length $T_{SW}$ of a full switching sequence and a 180-degree phase shift between them. The counters may be similar to those shown in Figures 7 and 8, for example. The first comparators 101a - 101c are used for comparing the value of a first counter $c_1$ according to the present method with values of switching instants $T_a$ to $T_c$, whereas the second comparators 102a to 102c are used for comparing the value of a second counter $c_2$ according to the present method with values of switching instants $T_a$ to $T_c$. The modulator blocks 100a to 100c generate converter leg control signals $S_a$ to $S_c$ on the basis of the comparator outputs.

In Figure 10, the modulator blocks 100a to 100c generate the rising-edge half sequences on the basis of the first counter $c_1$ and the falling-edge half sequences on the basis of the second counter $c_2$. The switching instants $T_a$ to

$T_c$ are connected to the negative inputs of the first comparators 101a to 101c, respectively. The switching instants $T_a$ to $T_c$ are also connected to the positive input of the second comparators 102a to 102c, respectively. As a result, when the first counter $c_1$ exceeds the reference $T_a$, $T_b$ or $T_c$, the output of the respective first comparator changes to a logic high ("1") level. Correspondingly, when the second counter $c_2$ exceeds the reference $T_a$, $T_b$ or $T_c$, the output of the respective second comparator changes to a logic low ("0") level.

In Figure 10, the multiplexers 103a to 103c are used for selecting which comparator (i.e. the first comparator or the second comparator) in each modulator block drives the respective converter leg control signals $S_a$ to $S_c$. A selection signal *sel* controls the multiplexers 103a - 103c. The selection signal *sel* may be a clock signal having a period of the full switching sequence. The phase of the selection signal *sel* may be configured such that during the rising-edge half sequence, the selection signal *sel* may be set to logic "1", and the outputs of the first comparators 101a to 101c drive the converter leg control signals $S_a$ to $S_c$. During the falling-edge half sequence, the selection signal *sel* may be set to logic "0", and the outputs of the second comparators 102a to 102c drive the converter leg control signals $S_a$ to $S_c$.

In Figure 10, the multiplexers are implemented by using two AND gates and an OR gate. The selection signal connects to a non-inverted input of one AND gate and to an inverted input of the other AND gate. The outputs of the first comparator and the second comparator connect to the second inputs of the AND gates. The outputs of the AND gates drive the inputs of the OR gate, and the output of the OR gate drives a converter leg control signal.

With the above-described two-counter approach, the switching frequency of the parallel-connected converters can easily be changed by changing the count-up limit of the counters and the period of the multiplexer control signal.

It will be obvious to a person skilled in the art that the inventive concept can be implemented in various ways. The invention and its embodiments are not limited to the examples described above but may vary within the scope of the claims.

The techniques described herein may be implemented by various means so that an apparatus implementing one or more functions described with an embodiment comprises not only prior art means, but also specific means for implementing the one or more functions described with an embodiment, and it may comprise separate means for each separate function, or specific means may be configured to perform two or more functions. The specific means may be software and/or software-hardware and/or hardware and/or firmware components (recorded indelibly on a medium such as read-only-memory or embodied in hard-wired computer circuitry) or combinations thereof. Software codes may be stored in any suitable processor/computer-readable data storage medium(s) or memory unit(s) or article(s) of manufacture and executed by one or more processors/computers, hardware (one or more apparatuses), firmware (one or more apparatuses), software (one or more modules), or combinations thereof. For a firmware or software, implementation can be through modules (e.g. procedures, functions, and so on) that perform the functions described herein.

**Claims**

1. A modulation method for controlling at least two parallel-connected, multi-phase power converters, wherein the method comprises
   generating synchronized switching sequences for the power converters on the basis of a common modulation reference, wherein each synchronized switching sequence comprises a first half sequence followed by a second half sequence, and wherein,
   for at least one of the power converters, the first half sequence is a rising-edge half sequence and the second half sequence is a falling-edge half sequence, and
   for at least one other of the power converters, the first half sequence is a falling-edge half sequence and the second half sequence is a rising-edge half sequence.

2. A modulation method according to claim 1, wherein initializations of the synchronized switching sequences of the at least two power converters have a first time interval between them, and the method comprises updating a value of the modulation reference at the start of or at intermediate times of each synchronized switching sequence of each power converter.

3. A modulation method according to claim 1 or 2, wherein the generating of synchronized switching sequences comprises
   running a first periodical counter and a second periodical counter, wherein the period of the first counter and the second counter is the length of the synchronized switching sequence, and the first and second counters have a phase shift between each other, and,
   for each power converter,
   determining switching instant values on the basis of the common modulation reference
   generating the first half sequences on the basis of a comparison between the first counter and the switching instant values, and
generating the second half sequences on the basis of a comparison between the second counter and the switching instant values.

4. A modulation method according to any one of claims 1 to 3, wherein the method comprises
updating the value of the modulation reference for each half sequence in or at intermediate times within a switching sequence.

5. An arrangement for controlling at least two parallel-connected, multi-phase power converters, wherein the arrangement comprises
a modulator system for generating switching sequences of the power converters on the basis of a common modulation reference, wherein each synchronized switching sequence comprises a first half sequence followed by a second half sequence, and wherein,
for the synchronized switching sequences of at least one of the power converters, the first half sequence is a rising-edge half sequence and the second half sequence is a falling-edge half sequence, and,
for the synchronized switching sequences of at least one other of the power converters, the first half sequence is a falling-edge half sequence and the second half sequence is a rising-edge half sequence.

6. An arrangement according to claim 5, wherein the modulator system is configured to
generate synchronized switching sequences of the at least two power converters such that the synchronized switching sequences are initialized at a first time interval, and
update a value of the modulation reference at the start of or at intermediate times of each synchronized switching sequence of each power converter.

7. An arrangement according to claim 5 or 6, wherein the modulator system comprises
a first periodical counter and a second periodical counter, wherein the period of the first counter and the second counter is the length of the synchronized switching sequence, and the first and second counters have a phase shift between each other, and,
for each power converter,
means for determining switching instant values on the basis of the common modulation reference
means for generating the first half sequences on the basis of a comparison between the first counter and the switching instant values and the second half sequences on the basis of a comparison between the second counter and the switching instant values.

**Patentansprüche**

1. Modulationsverfahren zum Steuern von mindestens zwei parallelgeschalteten Mehrphasenleistungsumsetzern, wobei das Verfahren Folgendes umfasst:

Erzeugen synchronisierter Schaltsequenzen für die Leistungsumsetzer auf der Grundlage eines gemeinsamen Modulationsbezugs, wobei jede synchronisierte Schaltsequenz eine erste Halbsequenz, der eine zweite Schaltsequenz folgt, enthält und wobei
für mindestens einen der Leistungsumsetzer die erste Halbsequenz eine Halbsequenz mit ansteigender Flanke ist und die zweite Halbsequenz eine Halbsequenz mit fallender Flanke ist und
für mindestens einen weiteren der Leistungsumsetzer die erste Halbsequenz eine Halbsequenz mit fallender Flanke ist und die zweite Halbsequenz eine Halbsequenz mit ansteigender Flanke ist.

2. Modulationsverfahren nach Anspruch 1, wobei Initialisierungen der synchronisierten Schaltsequenzen der mindestens zwei Leistungsumsetzer ein erstes Zeitintervall zwischen ihnen aufweisen und das Verfahren ein Aktualisieren eines Werts des Modulationsbezugs beim Start oder zu Zwischenzeiten jeder synchronisierten Schaltsequenz jedes Leistungsumsetzers umfasst.

3. Modulationsverfahren nach Anspruch 1 oder 2, wobei das Erzeugen synchronisierter Schaltsequenzen Folgendes umfasst:

Ausführen eines ersten periodischen Zählers und eines zweiten periodischen Zählers, wobei die Periode des ersten Zählers und des zweiten Zählers die Länge der synchronisierten Schaltsequenz ist und der erste und der zweite Zähler untereinander eine Phasenverschiebung aufweisen, und
für jeden Leistungsumsetzer
Bestimmen von Schaltzeitpunktwerten auf der Grundlage des gemeinsamen Modulationsbezugs,
Erzeugen der ersten Halbsequenzen auf der Grundlage eines Vergleichs zwischen dem ersten Zähler und den Schaltzeitpunktwerten und
Erzeugen der zweiten Halbsequenzen auf der Grundlage eines Vergleichs zwischen dem zweiten Zähler und den Schaltzeitpunktwerten.

4. Modulationsverfahren nach einem der Ansprüche 1 bis 3, wobei das Verfahren Folgendes umfasst:
Aktualisieren des Modulationsbezugs für jede Halbsequenz in oder zu Zwischenzeiten in einer ersten Schaltsequenz.

5. Anordnung zum Steuern von mindestens zwei parallelgeschalteten Mehrphasenleistungsumsetzern, wobei die Anordnung Folgendes umfasst:

ein Modulatorsystem zum Erzeugen von Schaltsequenzen der Leistungsumsetzer auf der Grundlage eines gemeinsamen Modulationsbezugs, wobei jede synchronisierte Schaltsequenz eine erste Halbsequenz, der eine zweite Schaltsequenz folgt, enthält und wobei
von den synchronisierten Schaltsequenzen mindestens eines der Leistungsumsetzer die erste Halbsequenz eine Halbsequenz mit ansteigender Flanke ist und die zweite Halbsequenz eine Halbsequenz mit fallender Flanke ist und
von den synchronisierten Schaltsequenzen mindestens eines weiteren der Leistungsumsetzer die erste Halbsequenz eine Halbsequenz mit fallender Flanke ist und die zweite Halbsequenz eine Halbsequenz mit ansteigender Flanke ist.

6. Anordnung nach Anspruch 5, wobei das Modulatorsystem konfiguriert ist zum
Erzeugen synchronisierter Schaltsequenzen der mindestens zwei Leistungsumsetzer, derart, dass sie in einem ersten Zeitintervall initialisiert werden, und
Aktualisieren eines Werts des Modulationsbezugs beim Start oder zu Zwischenzeiten jeder synchronisierten Schaltsequenz jedes Leistungsumsetzers.

7. Anordnung nach Anspruch 5 oder 6, wobei das Modulatorsystem Folgendes umfasst:

einen ersten periodischen Zähler und einen zweiten periodischen Zähler, wobei die Periode des ersten Zählers und des zweiten Zählers die Länge der synchronisierten Schaltsequenz ist und der erste und der zweite Zähler untereinander eine Phasenverschiebung aufweisen, und
für jeden Leistungsumsetzer
Mittel zum Bestimmen von Schaltzeitpunktwerten auf der Grundlage des gemeinsamen Modulationsbezugs und
Mittel zum Erzeugen der ersten Halbsequenzen auf der Grundlage eines Vergleichs zwischen dem ersten Zähler und den Schaltzeitpunktwerten und der zweiten Halbsequenzen auf der Grundlage eines Vergleichs zwischen dem zweiten Zähler und den Schaltzeitpunktwerten.

**Revendications**

1. Procédé de modulation pour commander au moins deux convertisseurs de puissance multiphases connectés en parallèle, le procédé comprenant
la génération de séquences de commutation synchronisées des convertisseurs de puissance en fonction d'une référence de modulation commune, chaque séquence de commutation synchronisée comprenant une première demi-séquence suivie d'une seconde demi-séquence, et dans lequel,
pour au moins un des convertisseurs de puissance, la première demi-séquence est une demi-séquence sur front montant et la seconde demi-séquence est une demi-séquence sur front descendant, et
pour au moins un autre des convertisseurs de puissance, la première demi-séquence est une demi-séquence sur front descendant et la seconde demi-séquence est une demi-séquence sur front montant.

2. Procédé de modulation selon la revendication 1, dans lequel des initialisations des séquences de commutation synchronisées des au moins deux convertisseurs de puissance ont un premier intervalle de temps entre elles, et le procédé comprenant
l'actualisation d'une valeur de la référence de modulation au début, ou à des temps intermédiaires, de chaque séquence de commutation synchronisée de chaque convertisseur de puissance.

3. Procédé de modulation selon la revendication 1 ou 2, dans lequel la génération de séquences de commutation synchronisées comprend

l'activation d'un premier compteur périodique et d'un second compteur périodique, dans lequel la période du premier compteur et du second compteur est la longueur de la séquence de commutation synchronisée, et les premier et second compteurs sont déphasés entre eux, et,

pour chaque convertisseur de puissance,

la détermination de valeurs instantanées de commutation en fonction de la référence de modulation commune

la génération des premières demi-séquences en fonction d'une comparaison entre le premier compteur et les valeurs instantanées de commutation, et

la génération des secondes demi-séquences en fonction d'une comparaison entre le second compteur et les valeurs instantanées de commutation.

4. Procédé de modulation selon l'une quelconque des revendications 1 à 3, le procédé comprenant

l'actualisation de la valeur de la référence de modulation pour chaque demi-séquence dans une séquence de commutation ou à des temps intermédiaires dans une séquence de commutation.

5. Agencement de commande d'au moins deux convertisseurs de puissance multiphases connectés en parallèle, l'agencement comprenant

un système modulateur pour générer des séquences de commutation synchronisées des convertisseurs de puissance en fonction d'une référence de modulation commune, chaque séquence de commutation synchronisée comprenant une première demi-séquence suivie d'une seconde demi-séquence, et dans lequel,

pour les séquences de commutation synchronisées d'au moins un des convertisseurs de puissance, la première demi-séquence est une demi-séquence sur front montant et la seconde demi-séquence est une demi-séquence sur front descendant, et

pour les séquences de commutation synchronisées d'au moins un autre des convertisseurs de puissance, la première demi-séquence est une demi-séquence sur front descendant et la seconde demi-séquence est une demi-séquence sur front montant.

6. Agencement selon la revendication 5, dans lequel le système modulateur est configuré pour

générer des séquences de commutation synchronisées des au moins deux convertisseurs de puissance de telle sorte que les séquences de commutation synchronisées soient initialisées à un premier intervalle de temps, et

actualiser la valeur de la référence de modulation au début, ou à des temps intermédiaires, de chaque séquence de commutation synchronisée de chaque convertisseur de puissance.

7. Agencement selon la revendication 5 ou 6, dans lequel le système modulateur comprend

un premier compteur périodique et un second compteur périodique, dans lequel la période du premier compteur et du second compteur est la longueur de la séquence de commutation synchronisée, et les premier et second compteurs sont déphasés entre eux, et,

pour chaque convertisseur de puissance,

un moyen de détermination de valeurs instantanées de commutation en fonction de la référence de modulation commune

un moyen de génération des premières demi-séquences en fonction d'une comparaison entre le premier compteur et les valeurs instantanées de commutation, et des secondes demi-séquences en fonction d'une comparaison entre le second compteur et les valeurs instantanées de commutation.

Figure 1

Figure 2

Figure 3a

Figure 3b

$V_3(010)$     $V_2(110)$

$\phi_2$

$V_0(000)$

$V_7(111)$

②

③     ①  $V_{ref}$

$\phi_1$

$(011)V_4$     $V_1(100)$

④     ⑥

⑤

$V_5(001)$     $V_6(101)$

Figure 4

$\mathbf{V}_{ref,n}$     $\mathbf{V}_{ref,n+1}$     $\mathbf{V}_{ref,n+2}$

$S_{high}(\mathbf{v}_{ref,n})$     $S_{low}(\mathbf{v}_{ref,n+1})$

| $V_1$ | $V_2$ | $V_7$ | $V_7$ | $V_2$ | $V_1$ |
| (100) | (110) | (111) | (111) | (110) | (100) |

$V_a$

$V_b$

$V_c$

$D_1$     $D_2$     $D_0$     $D_0$     $D_1$     $D_2$

0     $T_{sw}/2$

Figure 5

$\mathbf{V}_{ref,n-1}$        $\mathbf{V}_{ref,n}$        $\mathbf{V}_{ref,n+1}$        $\mathbf{V}_{ref,n+2}$

*Conv* 1    $S_{low}(\mathbf{v}_{ref,n-1})$    $S_{high}(\mathbf{v}_{ref,n})$    $S_{low}(\mathbf{v}_{ref,n+1})$

*Conv* 2    $S_{high}(\mathbf{v}_{ref,n-1})$    $S_{low}(\mathbf{v}_{ref,n})$    $S_{high}(\mathbf{v}_{ref,n+1})$

$T_{sw}$

$t_0$        $t_1$        $t_2$

Figure 6

$\mathbf{V}_{ref,n-3}$   $\mathbf{V}_{ref,n-2}$   $\mathbf{V}_{ref,n-1}$   $\mathbf{V}_{ref,n}$   $\mathbf{V}_{ref,n+1}$   $\mathbf{V}_{ref,n+2}$   $\mathbf{V}_{ref,n+3}$   $\mathbf{V}_{ref,n+4}$   $\mathbf{V}_{ref,n+5}$   $\mathbf{V}_{ref,n+6}$

$c_2$

$c_1$

$2\varphi$

$\varphi$

*Conv* 1    $S_{low}(\mathbf{v}_{ref,n-3})$    $S_{high}(\mathbf{v}_{ref,n})$    $S_{low}(\mathbf{v}_{ref,n+3})$

*Conv* 2    $S_{high}(\mathbf{v}_{ref,n-4})$    $S_{low}(\mathbf{v}_{ref,n-1})$    $S_{high}(\mathbf{v}_{ref,n+2})$    $S_{low}(\mathbf{v}_{ref,})$

*Conv* 3    $_{w}(\mathbf{v}_{ref,n-5})$    $S_{high}(\mathbf{v}_{ref,n-2})$    $S_{low}(\mathbf{v}_{ref,n+1})$    $S_{high}(\mathbf{v}_{ref,n+4})$

$T_{sw}$

$t_0$        $t_1$        $t_2$

Figure 7

$\mathbf{V}_{ref,n-2}$  $\mathbf{V}_{ref,n-1}$  $\mathbf{V}_{ref,n}$  $\mathbf{V}_{ref,n+1}$  $\mathbf{V}_{ref,n+2}$  $\mathbf{V}_{ref,n+3}$  $\mathbf{V}_{ref,n+4}$

$c_1$  $c_2$

$S_{low}(\mathbf{v}_{ref,n-2})$  $S_{high}(\mathbf{v}_{ref,n})$  $S_{low}(\mathbf{v}_{ref,n+2})$

$S_{high}(\mathbf{v}_{ref,n-3})$  $S_{low}(\mathbf{v}_{ref,n-1})$  $S_{high}(\mathbf{v}_{ref,n+1})$  $S_{low}(\mathbf{v}_{ref,n+3})$

$S_{high}(\mathbf{v}_{ref,n-2})$  $S_{low}(\mathbf{v}_{ref,n})$  $S_{high}(\mathbf{v}_{ref,n+2})$

$S_{low}(\mathbf{v}_{ref,n-3})$  $S_{high}(\mathbf{v}_{ref,n-1})$  $S_{low}(\mathbf{v}_{ref,n+1})$  $S_{high}(\mathbf{v}_{ref,n+3})$

$t_0$  $t_1$  $t_2$

$T_{sw}$

Figure 8

91

**T**

92

$\mathbf{T}_1$  $\mathbf{T}_2$  $\mathbf{T}_N$

90

94.1  94.2  $\bullet\bullet\bullet$  94.$N$

Figure 9

Figure 10

**EP 3 136 582 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012147639 A1